# EUROPÄISCHE PATENTANMELDUNG

(11) **EP 4 516 623 A1**
(43) Veröffentlichungstag der Anmeldung: **05.03.2025**
(21) Anmeldenummer: 23194131.1
(22) Anmeldetag: 30.08.2023
(51) Int. Cl.: B61L 1/16, G06N 3/0464

(54) **DEEP LEARNING BASIERTER ANSATZ ZUM AUSWERTEN EINES DATENSATZES EINES ACHSZÄHLERS**

(71) Anmelder: Siemens Mobility GmbH, 81739 München (DE)
(72) Erfinder: Ram, Surinder, 5201 5201 Seekirchen (AT); Bahlmann, Claus, 10707 Berlin (DE); Braband, Jens, 38106 Braunschweig (DE); Föge, Thorsten, 38106 Braunschweig (DE); Hambsch, Hardy, 12439 Berlin (DE); Jiang, Nanzhu, 12487 Berlin (DE)
(74) Vertreter: Siemens Patent Attorneys

(57) **Zusammenfassung**

Es wird ein computer-implementiertes Verfahren beschrieben zum Auswerten von einem Datensatz eines Achszählers (100), das Verfahren aufweisend:
i) Bestimmen einer Mehrzahl von Signalen aus dem Datensatz;
ii) Klassifizieren der bestimmten Signale; und
iii) Bereitstellen einer Auswertung des Datensatzes (130) basierend auf dem Bestimmen und dem Klassifizieren der Signale;
a) wobei das Bestimmen und das Klassifizieren der Signale mittels eines Deep Learning Algorithmus (150) durchgeführt wird, und
b) wobei der Deep Learning Algorithmus (150) ein Convolutional Neural Network (110) aufweist.

## Beschreibung

### Technisches Gebiet

Die Erfindung bezieht sich auf ein Computer-implementiertes Verfahren zum Auswerten eines Datensatzes eines Achszählers bzw. Sensors eines Achszählers. Insbesondere wird ein Bestimmen und Klassifizieren von Signalen (insbesondere Signal-Clustern) in dem Datensatz durchgeführt basierend auf einem Deep Learning Algorithmus, der bevorzugt ein Convolutional Neural Network aufweist. Ferner bezieht sich die Erfindung auf eine Vorrichtung zur Datenverarbeitung, den Achszähler, und ein Computerprogrammprodukt.

Die Erfindung kann sich somit auf das technische Gebiet der Auswertung (insbesondere deren Validierung) von Datensätzen eines Achszählers bzw. Achszähler-Sensors beziehen, insbesondere im Hinblick auf Schienenfahrzeuge.

### Technischer Hintergrund

Achszähler sind im Bereich der Schienen-gebundenen Fahrzeuge bzw. der Schieneninfrastruktur bekannt und bilden einen wesentlichen Teil der Kontrolle, z.B. dahingehend, ob ein Rad (eines Zuges) ein Gleis passiert und wie viele Räder vorbeigefahren sind. Dies kann für viele Anwendungen z.B. die Gleisfreimeldung und insbesondere für die Sicherheit innerhalb einer Schieneninfrastruktur von entscheidender Bedeutung sein. In der Regel sind Abschnitte eines Gleises jeweils mit zwei Achszähler-Sensoren (sogenannte Zählpunkte) ausgestattet, wobei sich der eine am Anfang und der andere am Ende des Abschnitts befindet. Ob ein Gleisabschnitt als frei oder belegt ermittelt wird, hängt dann insbesondere von der Anzahl der Räder ab, die von den beiden Achszähler-Sensoren erfasst werden. Eine übergeordnete Auswerteeinheit (der eigentliche Achszähler) wertet die durch die Sensoren erfassten Signale aus und leitet darauf den Zustand des Gleisabschnittes ab. Nur wenn ein Abschnitt auch tatsächlich als frei erkannt wird, darf ein Zug diesen Gleisabschnitt passieren.

Im Kontext des vorliegenden Dokuments kann der Begriff "Achszähler" sowohl die Einheit "Sensor (bzw. Zählpunkt) und Auswerteeinheit" umfassen als auch nur auf die Auswerteeinheit (der eigentliche Achszähler) bezogen werden. Soll speziell auf den Sensor Bezug genommen werden, so kann der Begriff "Achszähler Sensor" verwendet werden, und soll speziell nur auf die Auswerteinheit Bezug genommen werden, so kann der Begriff "Auswerteeinheit" verwendet werden.

Insbesondere im Bereich der Schienenfahrzeuge werden aber besonders hohe Anforderungen an Sicherheit und Zuverlässigkeit gestellt. Entsprechend können in zahlreichen Anwendungsfällen ausgewertete Datensätze eines Achszählers, insbesondere zur Automatisierung des Schienenverkehrs, nur dann eingesetzt werden, wenn eine besonders hohe Zuverlässigkeit nachgewiesen ist.

Bisher kann ein Achszähler in der Anwendung keine 100%ige Zählgenauigkeit erreichen. Dies liegt zum einen an komplizierten/komplexen Signalen, die von den Achszählersensoren erfasst werden, und zum anderen an den Verarbeitungsmethoden von Signalen, die nicht genau genug sind, um komplizierte Fälle zu behandeln; unter andrem, auch weil die Signale eventuell gestört (Rauschen) sein können und weil sie ggf. durch die unterschiedlichen Geschwindigkeiten vielzählige Kurvenformen entstehen. In Extremfällen können Züge am Sensor stehen und/oder umdrehen. Dies ist kein sicherungstechnisches Problem, da die Zählungen immer zur sicheren Seite gehen, sondern ein Verfügbarkeitsproblem.

Derzeit wird die Zählung der Räder (bzw. Auswerten des Datensatzes) sehr konservativ durchgeführt, um die Sicherheit der Schienenfahrzeuge zu gewährleisten. So wird ein Abschnitt einer Strecke als "besetzt" und nicht als "frei" betrachtet, wenn die Zählgenauigkeit nicht zu 100 % sicher ist.

Eine weitere Einschränkung der konventionellen Achszähler besteht darin, dass sie zwar mit hoher Sicherheit das Auftreten von Rädern erkennen können, jedoch selbst hochmoderne Produkte solche Ergebnisse nur auf Kosten von falsch-positiv-Erkennungen liefern können (was bedeutet, dass, obwohl kein Rad den Sensor passiert, ein Signal erkannt wird (z.B. durch Metallmassen, die den Sensor beeinflussen) und wie ein vorbeifahrendes Rad vom Sensor gezählt wird).

Ferner kann ein konventioneller Achszähler Merkmale eines passierenden Schienenfahrzeugs (z.B. Magnetschienenbremsen, Räder, Drehgestelle, oder auch ob es sich um einen Güterzug, Personenzug usw. handelt) nicht weiter klassifizieren.

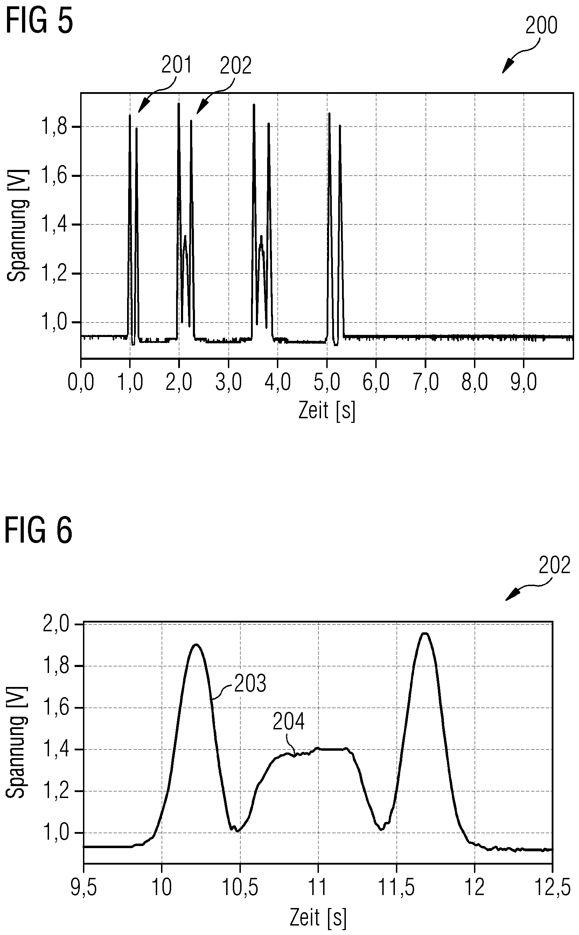

**Figur 5** zeigt ein Beispiel eines analogen Datensatzes 200 (Datensatz 210 stellt das digitalisierte Signal dar), welcher von einem Achszählersensor (ein Achszählsensor oder auch Zählpunkt, hier bestehend aus zwei Sensorteilsystemen) aufgenommen wurde. In diesem Beispiel haben vier Drehgestelle eines Schienenfahrzeugs den Sensor passiert. Da jedes Drehgestell in diesem Beispiel zwei Achsen (mit jeweils zwei Rädern, von denen immer dasjenige auf Seite des Sensors erfasst wird) aufweist, sind immer zwei Signale (bzw. Peaks, Pulse) dicht beieinander lokalisiert (Peak Cluster). Anders ausgedrückt entsprechen die hohen Signale den realen Rädern. Ferner können im zweiten und dritten Drehgestell geringere Signale zwischen den hohen Signalen beobachtet werden. Diese werden gewöhnlich von Magnetschienenbremsen verursacht.

**Figur 6** zeigt eine Detailansicht eines Signal Clusters eines zweiachsigen Drehgestells, wobei ein niedriges Signal einer Magnetschienenbremse 204 zwischen zwei hohen Signalen der Räder 203 lokalisiert ist.

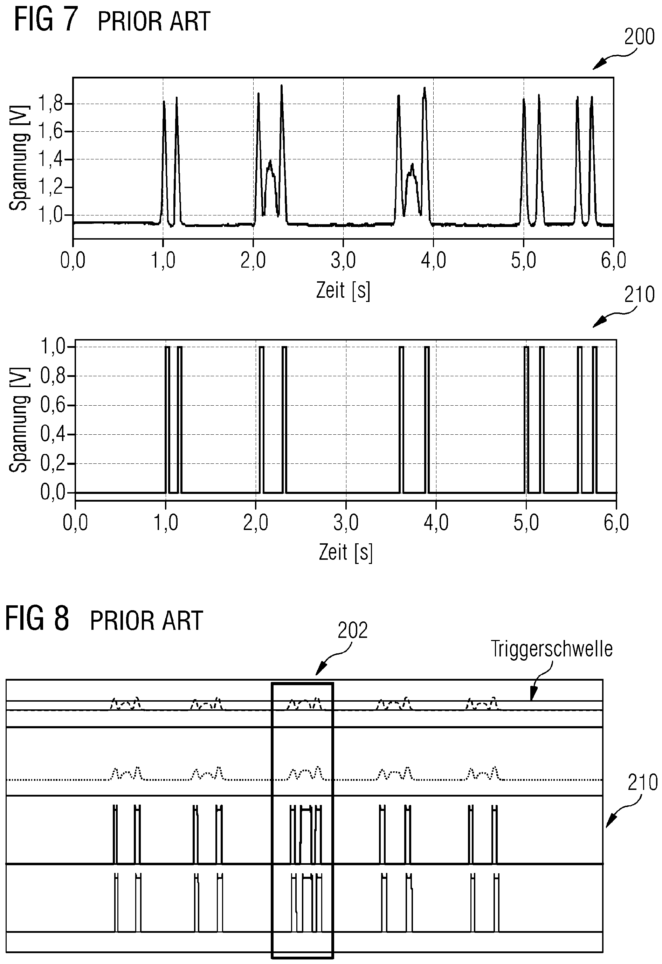

Konventionell wird zur Verarbeitung von Achszählersignalen die "single-thresholding" (einfacher Schwellenwert) Methode verwendet. Diese Methode ist in **Figur 7** anschaulich dargestellt. Für jeden Achszähler wird ein vordefinierter Schwellenwert konfiguriert. Nach dem Aufnehmen des Datensatzes 200 werden die erfassten Signal bei einem bestimmten Schwellenwert eines Achszählers abgeschnitten (truncation) (Bezugszeichen 210): Werte oberhalb dieses festen Schwellenwerts werden auf "1" und Werte unterhalb des Schwellenwerts auf "0" abgebildet. Der Wert "1" gibt einen Zeitpunkt an, an dem ein Rad einen Achszähler passiert. Datenreihe 210 zeigt somit nach dem "Abschneiden" (truncation) im Idealfall nur noch Radsignale. Der Vorteil dieser Methode besteht darin, dass sie schnell genug ist, um eine Echtzeiterkennung für das Vorhandensein von Rädern bereitzustellen.

Jedoch kann die konventionelle Methode einen entscheidenden Nachteil haben: der Kontext wird nicht berücksichtigt. Wenn ein Radsignal den Schwellenwert nicht erreicht, so kann es nicht erfasst werden (falsch negativ). Wenn der Datensatz ein Rauschen bzw. nicht-Rad-Signal aufweist, z.B. verursacht durch eine Magnetschienenbremse, kann dieses Signal den Schwellenwert überschreiten und ein zusätzliches, nicht vorhandenes Rad wird gezählt (falsch positiv).

Wenn sich die Signale nahe am Schwellenwert befinden, kann es somit äußerst schwierig sein zu bestimmen, ob es sich um ein Rad handelt oder nicht. Dies sind auch die Hauptgründe für "falsch positiv" und "falsch negativ" Detektion. Solche Fehlerfälle können recht häufig auftreten und zu ungenauen Auswertungen der Achszähler Datensätze führen. Dies führt dann z.B. dazu, dass ein Gleisabschnitt als belegt gilt und den Zugverkehr behindert, bis er dann manuell wieder aufgelöst wird.

**Figur 8** zeigt ein Beispiel für einen "false positiv" Fehler (falsch positiv) gemäß der konventionellen "single threshold" Methode. Innerhalb der eingezeichneten Box zeigt die erste Zeile das vom ersten Sensorteilsystem erfasste Signal und die zweite Zeile das vom zweiten Sensorteilsystem erfasste Signal. Dies sind die beiden Sensoren in einem Achszähler. Die dritte und vierte Zeile sind die Ergebnisse eines konventionellen single threshold-Algorithmus, der die digitalisierten Schwellenwertsignale des ersten bzw. zweiten Sensorteilsystems auswertet (entsprechend der Bewertung der analogen Signale aus der ersten bzw. zweiten Zeile). Die horizontale Linie in der ersten Zeile zeigt den festgelegten Schwellenwert (Triggerschwelle) an. Im Beispiel der Box betrachtet der Algorithmus für einen einzelnen Schwellenwert aufgrund des Peaks in der Mitte (verursacht durch eine Magnetschienenbremse zwischen den beiden Rädern) fälschlicherweise das Ergebnis als drei Räder auf einem zweiachsigen Drehgestell.

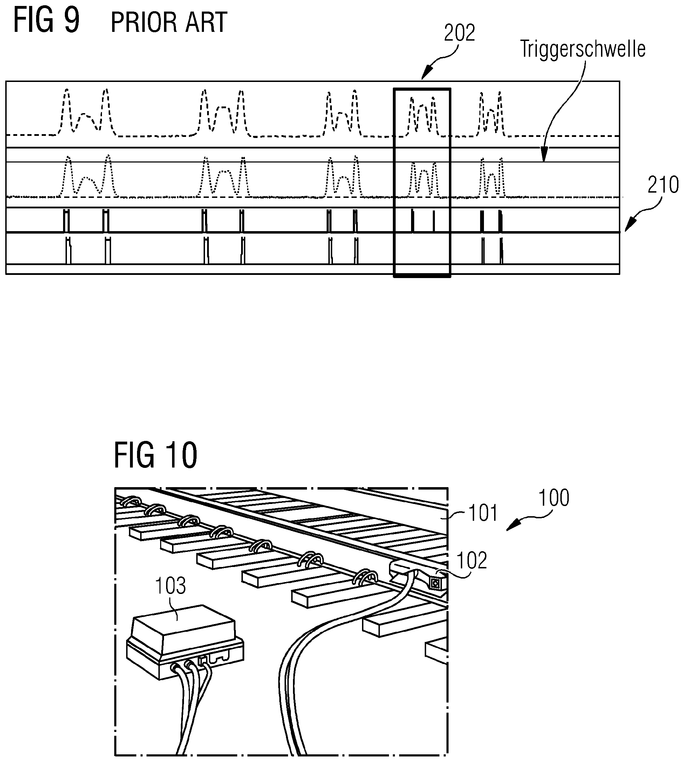

**Figur 9** zeigt ein Beispiel für einen "false negative" Fehler (falsch negativ) gemäß der konventionellen "single threshold" Methode. Wie in Figur 8 sind in den Reihen eins bis vier die Signale von dem ersten Sensorteilsystem und dem zweiten Sensorteilsystem sowie deren Schwellenwerte angegeben. Im Beispiel der eingezeichneten Box, in der zweiten Reihe, gibt es zwei hohe Signale von Rädern und ein niedrigeres Signal, welches durch eine Magnetschienenbremse verursacht wird. Die horizontale Linie ist der festgelegte Schwellenwert. In der entsprechenden vierten Reihe, die das Schwellwertsignal von dem zweiten Sensorteilsystem zeigt, wird jedoch kein Rad erkannt. Dies liegt daran, dass die Werte der Signale in der zweiten Zeile zu niedrig sind und den Schwellenwert nicht überschreiten.

Die oben ausgeführten Nachteile stehen nicht in Einklang mit einem effizienten Schienenverkehr. Ferner können diese Nachteile einer gewünschten voranschreitenden Automatisierung im Schienenverkehr (bei zugleich hohen Sicherheitsstandards) entgegenstehen.

### Zusammenfassung der Erfindung

Es könnte ein Bedarf bestehen, einen Datensatz eines Achszählers in effizienter und zuverlässiger Weise auszuwerten bzw. die Auswertung zu validieren.

Ein Verfahren zum Auswerten eines Datensatzes eines Achszählers, eine Vorrichtung zur Datenverarbeitung, ein Achszähler, und ein Computerprogrammprodukt werden im Folgenden beschrieben.

Gemäß einem ersten Aspekt der Erfindung wird ein, insbesondere Computer-implementiertes, Verfahren zum Auswerten (bzw. Validieren der Auswertung) von einem Datensatz eines Achszählers (bzw. Sensor eines Achszählers; in anderen Worten: ein Datensatz der im Kontext von Achszählern steht) beschrieben, das Verfahren aufweisend:
i) Bestimmen (bzw. Extrahieren/Erkennen) einer Mehrzahl von Signalen (dies können einzelne Signal und/oder Signal Cluster (bzw. zwei oder mehr Signale, welche insbesondere miteinander assoziiert sind) sein) aus dem Datensatz;
ii) Klassifizieren der bestimmten Signale (einzelne Signale und/oder Signal Cluster) (insbesondere in Signal Klassen und/oder Bestimmen von ein oder mehr Parametern); und
iii) Bereitstellen einer Auswertung (insbesondere Validierung einer Auswertung) des Datensatzes basierend auf dem Bestimmen und dem Klassifizieren der Signale.
Das Bestimmen und/oder das Klassifizieren der Signale wird hierbei mittels eines Deep Learning Algorithmus durchgeführt, insbesondere wobei der Deep Learning Algorithmus ein Convolutional Neural Network (ein faltendes neuronales Netzwerk) aufweist.

Gemäß einem zweiten Aspekt der Erfindung wird eine Vorrichtung zur Datenverarbeitung (insbesondere eine Auswerteeinheit eines Achszählers) beschrieben, welche zumindest einen Prozessor aufweist, und welche eingerichtet ist zumindest eines der oben beschriebenen Verfahren auszuführen.

Gemäß einem dritten Aspekt der Erfindung wird ein Achszähler bzw. eine Achszähler-Vorrichtung beschrieben, welcher aufweist:
i) einen Sensor (bzw. eine Sensorvorrichtung, z.B. ein Doppelsensor-System) zum Aufnehmen eines Datensatzes (bzw. Erfassen von (Rad-)Signalen über die Zeit); und
ii) eine Vorrichtung zur Datenverarbeitung (insbesondere eine Auswerteinheit eines Achszählers) wie oben beschrieben. Insbesondere sind Sensor(-vorrichtung) und Vorrichtung zur Datenverarbeitung miteinander gekoppelt (z.B. drahtgebunden oder drahtlos).

Gemäß einem vierten Aspekt der Erfindung wird ein Computerprogrammprodukt beschrieben, welches Befehle aufweist, die bei der Ausführung des Programms durch einen Computer diesen veranlassen das oben beschriebene Verfahren auszuführen.

Im Kontext dieses Dokuments kann sich der Begriff "künstliche Intelligenz (KI)" insbesondere auf Computer-basierte Ansätze zur Nachahmung kognitiver Funktionen eines menschlichen Geistes beziehen, insbesondere Lernen und Problemlösung. Es wurden eine Vielzahl verschiedener mathematischer Algorithmen und Berechnungsmodelle entwickelt, um KI-Funktionalitäten zu implementieren, beispielsweise "maschinelles Lernen", insbesondere mittels neuronaler Netzwerke. Der Hauptzweck dieser Ansätze kann darin gesehen werden, ein Modell zu entwickeln und zu verbessern, indem der Algorithmus mit Trainingsdaten trainiert wird, so dass ein Lerneffekt auftritt und sich die Problemlösungsfähigkeit des Algorithmus im Laufe der Zeit verbessert. Dies kann mit oder ohne menschliches Eingreifen (z.B. Verbessern) geschehen.

Im Kontext dieses Dokuments kann sich der Begriff "Deep Learning" (mehrschichtiges/tiefes Lernen) insbesondere auf eine spezielle Form von maschinellem Lernen (als spezielle Form von KI), insbesondere neuronalen Netzwerken, beziehen. Insbesondere werden bei Deep Learning Algorithmen künstliche neuronale Netze mit zahlreichen Zwischenschichten (hidden layers) zwischen Eingabeschicht und Ausgabeschicht einsetzt, wodurch eine umfangreiche innere Struktur herausbildet werden kann. Deep Learning kann sich in einem Beispiel besonders gut dafür eignen, dass ein Algorithmus sich selbst durch Training verbessert (selbstadaptiv).

Im Kontext dieses Dokuments kann sich der Begriff "Convolutional Neural Network (CNN)" (faltendes neuronales Netzwerk) insbesondere auf einen speziellen Deep Learning Ansatz beziehen. Die Struktur eines Convolutional Neural Networks kann in einem Beispiel ein oder mehr Convolutional Layer aufweisen, gefolgt von ein oder mehr Pooling Layer. Nach einigen sich wiederholenden Einheiten kann zuletzt eine Fully-Connected Layer vorgesehen werden. Aufgrund der Reduktion der Datenmenge in den Convolutional und Pooling Schichten können sich CNNs besonders gut dafür eignen hohe Datenmengen zu verarbeiten, z.B. Bilder mit besonders hoher Auflösung.

Gemäß einem exemplarischen Ausführungsbeispiel kann die Erfindung auf der Idee basieren, dass ein Datensatz eines Achszählers in effizienter und zuverlässiger Weise ausgewertet werden kann, wenn ein spezifisches Auswerteverfahren gewählt wird, dass auf Bilderkennung (bzw. Merkmalsextraktion/Mustererkennung) mittels künstlicher Intelligenz (KI) basiert, und diesen Ansatz mittels eines Convolutional Neural Networks umsetzt.

Im Gegensatz zu konventionellen Ansätzen zur Klassifizierung mittels KI, bei denen es letztlich nur auf das Endergebnis ankommt, verwendet ein Convolutional Neural Network einen Ansatz der semantischen Verarbeitung (z.B. semantische Segmentierung). Dieser fordert nicht nur eine Unterscheidung für jeden Datenpunkt, sondern auch einen Mechanismus, um die in verschiedenen Stufen erlernten Unterscheidungsmerkmale auf den Datenpunktraum zu projizieren.

Algorithmen zu Convolutional Neural Networks sind allgemein bekannt (z.B. U-Net) für Anwendungen wie medizinische Bilder und Systeme für assistiertes oder autonomes Fahren. Diese Netzwerke werden konventionell für anspruchsvolle und komplexe 2D und 3D Darstellungen verwendet, denn sie können besonders vorteilhaft sein zum Verarbeiten von großen Datenmengen wie komplexen Bilder mit hoher Auflösung. Eine vorteilhafte Anwendung auf einfache 1D Datensätze wie einen Achszähler Datensatz ist bislang nicht untersucht bzw. bekannt.

Nun wurde aber von den Erfindern erkannt, dass die Auswertung eines Achszähler Datensatzes basierend auf einem Convolutional Neural Networks Ansatz überraschend effizient und zuverlässig funktionieren kann. Das beschriebene Verfahren kann in einem Beispiel verschiedene Arten von Zugmerkmalen, wie Magnetschienenbremsen, Räder, Drehgestelle und ganze Waggons, erkennen, klassifizieren und segmentieren, im Gegensatz zu konventionellen Auswerte-Ansätzen, die z.B. nur Räder erkennen und nicht zwischen anderen Merkmalen (wie Magnetschienenbremsen) unterschieden können.

Das beschriebene Verfahren kann in einem Beispiel dazu beitragen die Robustheit gegenüber Signalrauschen deutlich zu erhöhen, da größere Intervalle des Signals zur Detektion und Klassifizierung verwendet werden. Darüber hinaus kann das Verfahren ein "Qualitätsmaß" des zugrunde liegenden Signals berechnen, das in übergeordneten Steuerungssystemen zur Berechnung von Zuverlässigkeitswerten verwendet werden kann.

Das beschriebene Verfahren kann in einem Beispiel deutlich verbesserte Genauigkeitswerte im Vergleich zu aktuellen Methoden nach dem Stand der Technik ermöglichen. Eine besonders zuverlässige Auswertung in kurzer Zeit kann somit erhalten werden, welche neben der Bestimmung auch eine Klassifizierung der erfassten Signale ermöglicht. Das beschriebene Verfahren kann rechentechnisch besonders schnell und kostengünstig durchführbar sein und direkt in existierende Systeme implementiert werden.

### Exemplarische Ausführungsbeispiele

Gemäß einem Ausführungsbeispiel weist das Klassifizieren ein Einordnen in eine Signal Klasse auf. Diese Klassen können entsprechend der jeweiligen Anwendung definiert werden und der zugrunde liegende KI Algorithmus kann entsprechend trainiert werden. Eine Signal Klasse kann ein oder mehr Unterscheidungsmerkmale (features) aufweisen, die für diese Klasse indikativ sind. Eine Signal Klasse kann sich auf einzelne Signale und/oder Signal Cluster (zwei oder mehr Signale, welche miteinander assoziiert sind) beziehen.

Gemäß einem Ausführungsbeispiel weist das Klassifizieren ein Bestimmen von ein oder mehr Parametern auf. Hierbei kann es sich zum Beispiel um eine Geschwindigkeit, insbesondere eine Verzögerung, handeln. Zum Bestimmen/Berechnen des Parameters können eine Mehrzahl von Signalen in einem Zeitverlauf betrachtet werden.

Gemäß einem weiteren Ausführungsbeispiel kann zumindest eine der folgenden Tasks (Aufgaben) bearbeitet werden:
i) eine Zeitpunkt (Event) Klasse. Diese Signal Klasse kann sich insbesondere auf ein bestimmtes Unterscheidungsmerkmal bzw. ein bestimmtes (einzelnes) Signal beziehen. Als Beispiel kann das Maximum eines Rad-Signals oder der mittlere Punkt eines Magnetschienenbremse-Signals angesehen werden.
ii) eine Zeitbereich(range) Klasse. Diese Signal Klasse kann sich insbesondere auf Zeitabschnitte von Signalen beziehen. Auch die Zeitbereich Klasse kann mit einem bestimmten Unterscheidungsmerkmal assoziiert sein. Beispiele von Zeitbereich Klassen können umfassen: zwei-Räder Signal-Verläufe bzw. Signal-Cluster (zwei Rad-Pulse), zwei-Räder-eine-Magnetschienenbremse Signal-Verläufe (drei Pulse), einachsiges Drehgestell (ein Pulse), zweiachsiges Drehgestell (zwei oder drei Pulse). In einem spezifischen Beispiel kann auch nur ein Rad (bzw. eine Bremse) als Zeitbereich (range) angesehen werden.
iii) eine Geschwindigkeit-Berechnung Task (time delay) (bzw. Bestimmen des Parameters "Geschwindigkeit"). Diese Task kann sich insbesondere auf Unterscheidungsmerkmale bezüglich eines Zeitverlauf beziehen. Diese Task kann in einem Beispiel weniger eine Signal Klasse darstellen, sondern als Möglichkeit angesehen werden die Geschwindigkeit zu berechnen (d.h. nicht die Klassifizierung von Zeitpunkten und Zeitbereichen, sondern z.B. einer Verzögerung basierend auf der Geschwindigkeit). So können Signale z.B. verbreitert werden, wenn ein Zug langsamer fährt und verengt werden, wenn der Zug schneller fährt. Auf diese Weise können mehrere Signale indikativ für eine Geschwindigkeit (auch ein Stopp) sein, so dass z.B. eine Verzögerung oder Beschleunigung ermittelt werden kann.
In anderen Worten, kann ein Waggon der unterschiedlich schnell vorbeifährt, unterschiedlich gestreckte/gestauchte Kurven erzeugen, wodurch sich die Möglichkeit der Bestimmung der Geschwindigkeit des Zuges ergibt. Basierend auf der Geschwindigkeit Berechnung kann eine interne Signalverarbeitung z.B. ein Ausgangssignal "normalsieren", und damit die Stauchung/Streckung verhindern/kompensieren.

Gemäß einem weiteren Ausführungsbeispiel weist das Bestimmen des Parameters auf: einen Laufzeitunterschied, insbesondere betreffend zumindest eines von Geschwindigkeit, Verzögerung, Beschleunigung.

Gemäß einem weiteren Ausführungsbeispiel weist der Achszähler (bzw. der Achszähler-Sensor) auf: einen weiteren Sensor (bzw. ein zweites Sensorteilsystem), welcher bezüglich des zumindest einen Sensors (bzw. des ersten Sensorteilsystems) beabstandet (bzw. die Sensoren (Sensorteilsysteme) sind in Abstand voneinander angeordnet) ist, insbesondere 5 cm oder mehr, weiter insbesondere 10 cm oder mehr. Dadurch kann die Geschwindigkeit effizienter und genauer erfasst werden. Basierend auf der Kenntnis der Geschwindigkeit kann dann auch die Signalverarbeitung verbessert werden (z.B. kann "normalisiert" werden, siehe oben).

Gemäß einem weiteren Ausführungsbeispiel kann ein deutlich effizienteres Auswerten gelingen, wenn neben dem Erfassen der Signale auch die Bedeutung der jeweiligen Peaks/Formen "verstanden" und mit einbezogen wird. Das Klassifizieren anhand von Signal Klassen kann auch für weitere Anwendungen in der Schienenverkehr Automatisierung mit Vorteil eingesetzt werden. Eine weitere Klassifizierung (im Sinne einer noch feineren Unterteilung/Klassifizierung) der passierenden Komponenten (z.B. Räder, aktive Magnetschienenbremsen, Magnetschienenbremsen, Drehgestelle, etc.) könnte eine wichtige Voraussetzung für den erhöhten Sicherheitsbedarf der nächsten Generation von Zugbeeinflussungssystemen darstellen.

Gemäß einem weiteren Ausführungsbeispiel ist das Convolutional Neural Network mit einer Multi-Task Learning (bzw. Multi-Task Layer) Implementierung gekoppelt. Der Begriff "Multi-Task Learning" bezieht sich in diesem Kontext insbesondere nicht auf einen bestimmten Algorithmus, sondern auf eine Implementierung, die EIN (man kann mit einer Implementierung auskommen anstatt mehreren, bzw. eine für jeden Task) Bearbeiten von zwei oder mehr Aufgaben anhand eines Schicht-Aufbaus ermöglicht. Multi-Task Learning Implementierungen sind an sich bekannt, auch Kopplungen mit Convolutional Neural Networks wie U-Net wurden beschrieben. Jedoch werden solche Kopplungen stets für komplexe Problemstellungen im 2D oder 3D Kontext eingesetzt. Eine Anwendung auf 1D Datensätze wie Achszähler Daten ist jedoch nicht beschrieben und eine vorteilhafte Anwendung in diesem Bereich bislang nicht bekannt.

Gemäß einem weiteren Ausführungsbeispiel ist die Multi-Task Learning Implementierung eingerichtet, eine Mehrzahl (zwei oder mehr) von Aufgaben (Tasks) zu bearbeiten, insbesondere wobei jede Aufgabe zumindest einer Signal Klasse und/oder einem Bestimmen eines Parameters zugeordnet ist bzw. mit dieser assoziiert ist. Dies kann den Vorteil haben, dass bei Verwendung eines Netzwerks (Convolutional Neural Network) dennoch eine Mehrzahl von Aufgaben zugleich bearbeitet werden können. Beispielsweise können bei Auswertung des Datensatzes die Signale gleichzeitig mehreren Signal Klassen zugeordnet werden.

In einem exemplarischen Ausführungsbeispiel kann ein Signal (hier: zwei Peaks) zugleich in einer ersten Aufgabe betreffend "Zeitpunkt Klassen" zweimal der Signal Klasse "Rad" zugeordnet werden. Zeitlich kann das Signal in einer zweiten Aufgabe betreffend "Zeitbereich Klassen" einmal der Signal Klasse "zwei Räder" und einmal der Signal Klasse "zweiachsiges Drehgestell" zugeordnet werden. Weiterhin kann das Signal zeitgleich in einer dritten Aufgabe betreffend "Geschwindigkeit" zusammen mit weiteren Signalen betrachtet werden und z.B. dem Ergebnis "Geschwindigkeit reduziert -> Verzögerung liegt vor" zugeordnet werden.

In einem spezifischen Beispiel wird für die Aufgabe der Achszählung und für die zusätzlichen Aufgaben der Segmentierung und Klassifizierung von Achsen eine neuronale Netzwerkarchitektur aus einem 1-dimensionalen U-Net und einem Multi-Task Learning Ansatz beschrieben.

Gemäß einem weiteren Ausführungsbeispiel weist der Deep Learning Algorithmus genau ein Convolutional Neural Network auf, insbesondere wobei mittels der Kopplung mit der Multi-Task Learning Implementierung eine Mehrzahl von Aufgaben bearbeitbar sind. Dies kann den Vorteil haben, dass das Verfahren mit geringerem (Kosten) Aufwand aber ebenso effizient durchgeführt wird. Ein besonderer Vorteil der Multi-Task Learning Implementierung kann darin bestehen, dass nur ein neuronales Netzwerk anstelle von mehreren unabhängigen neuronalen Netzwerken eingesetzt wird. Die Anforderungen bezüglich Prozessieren und Speichern werden in einem Beispiel durch Multi-Task Learning (im Wesentlichen) nicht erhöht.

In einem Beispiel wird das Konzept des Multi-Task Lernens für Deep Learning basierte Klassifikatoren angewendet. Daher kann es möglich sein, dass dieselbe singuläre ML-Architektur verwendet werden kann, um mehrere Arten von Merkmalen zu segmentieren, zu bestimmen, und zu klassifizieren (verschiedene Merkmale, z.B. Räder und Drehgestelle, Zuggeschwindigkeiten, Qualitätsattribute usw.), während der Berechnungsaufwand für Training und Inferenz (im Wesentlichen) derselbe bleibt wie bei einem Klassifikator für eine einzelne Aufgabe.

Gemäß einem weiteren Ausführungsbeispiel ist die Multi-Task Learning (Multi-Task Layer) Implementierung dem Convolutional Neural Network in Prozessrichtung (process flow downstream) nachgeschaltet.
Insbesondere sind Encoder und Decoder Schichten (bei einer U-Net Implementierung) des Convolutional Neural Network mit Multi-Task Learning Schichten der Multi-Task Learning Implementierung kombiniert. Diese Realisierung kann das Konzept der Betrachtung unterschiedlicher Signal Klassen besonders effizient umsetzen.

Gemäß einem weiteren Ausführungsbeispiel weist das Convolutional Neural Network ein U-Net auf. Dies kann den Vorteil haben, dass das Convolutional Neural Network direkt und effizient basierend auf etablierter Technologie implementiert werden kann. U-Net kann als ein spezielles (fully) Convolutional Neural Network verstanden werden, welches insbesondere bezüglich der Menge an Trainingsdaten und der Zuverlässigkeit der Segmentierung optimiert ist. Gerade die Kombination der Vorteile: hohe Geschwindigkeit, potenziell geringe Menge an Trainingsdaten, und zuverlässige Segmentierung; kann für die vorliegende Anwendung (am Achszähler) besonders effektiv sein.

In anderen Worten kann Deep Learning in einem Beispiel viele Daten verbrauchen, wobei jedoch ein Modell erstellt werden kann, dass wenige Parameter hat und daher auch relativ wenig Daten benötigt.

Gemäß einem weiteren Ausführungsbeispiel weist das Verfahren ferner auf: Trainieren des Deep Learning Algorithmus (insbesondere des Convolutional Neural Network) mit einer Mehrzahl von Achszähler Datensätzen. Insbesondere wobei das Trainieren ferner aufweist: Erlernen von Signalformen, welche für bestimmte Signal Klassen indikativ sind (um ein Bestimmen der Signale und Klassifizieren der Signale in Signal Klassen zu ermöglichen). Die Trainingsdaten können hierbei gemessene (reale) und/oder simulierte Datensätze umfassen. Je nach Anwendung können bestimmte Trainingsansätze besonders geeignet sein.

Gemäß einem weiteren Ausführungsbeispiel weist das Verfahren ferner auf: Bestimmen von zumindest einem der folgenden basierend auf der Auswertung (insbesondere der Auswertung der Zeit-basierten Signal Klasse(n)): einer Geschwindigkeit, einer Länge, eines Fahrzeug-Typs, einer Anomalie, insbesondere einem Defekt, einer benötigter Wartung.

Dadurch kann das beschriebene Verfahren neue Möglichkeiten für das gesamte Steuerungssystem von Schienenfahrzeugen ermöglichen, im Folgenden einige Ausführungsbeispiele:
i) Die Erkennung und Klassifizierung von Drehgestellen könnte zur Berechnung der Zuggeschwindigkeit verwendet werden (bzw. der Zugtyp und die Abmessungen sind bekannt, so dass die Geschwindigkeit berechnet werden kann);
ii) Die Länge und die Art des Zuges (z.B. Güterzug, Passagier) könnte geschätzt werden. Die Anzahl der Waggons könnte gezählt werden;
iii) Anomalien (z.B. Defekte an den Rädern und/oder Magnetschienenbremsen) könnten erkannt und gemeldet werden;
iv) Auch eine vorausschauende Wartung könnte auf dem vom Achszähler aufgezeichneten Signal basieren.

Gemäß einem weiteren Ausführungsbeispiel weist das Verfahren ferner auf: Vorprozessieren des Datensatzes zum Entfernen von Rauschen, insbesondere mittels Glätten (smoothing) und/oder down-sampling. Dies kann den Vorteil haben, dass auch niedrig aufgelöste Signale verwendet werden können.

Gemäß einem weiteren Ausführungsbeispiel wird das Verfahren im Zusammenhang mit Schienen-gebundenen Fahrzeugen und/oder Schieneninfrastruktur eingesetzt.

Oben wurde bereits detailliert die Achszähler Anwendung im Schienenverkehr diskutiert. Ferner hat der Bereich der Schienenfahrzeuge besonders hohe Anforderungen an Sicherheit und Zuverlässigkeit und entsprechende Normen. Daher kann der Einsatz des Verfahren zum Validieren von Auswertungen in diesem Zusammenhang besonders wichtig und vorteilhaft sein.

Es ist zu beachten, dass Ausführungsformen der Erfindung unter Bezugnahme auf verschiedene Gegenstände beschrieben wurden. Insbesondere wurden einige Ausführungsformen unter Bezugnahme auf Verfahrensansprüche beschrieben, während andere Ausführungsformen unter Bezugnahme auf Vorrichtungsansprüche beschrieben wurden. Ein Fachmann wird jedoch aus dem Vorstehenden und der folgenden Beschreibung entnehmen, dass, sofern nicht anders angegeben, neben jeder Kombination von Merkmalen, die zu einer Art von Gegenstand gehören, auch jede Kombination von Merkmalen, die sich auf verschiedene Gegenstände beziehen, als von diesem Dokument offenbart gilt. Dies insbesondere auch zwischen Merkmalen der Verfahrensansprüche und Merkmalen der Vorrichtungsansprüche.

Die oben definierten Aspekte und weitere Aspekte der vorliegenden Erfindung ergeben sich aus den nachstehend zu beschreibenden Beispielen der Ausführungsformen und werden unter Bezugnahme auf die Beispiele der Ausführungsformen erläutert. Die Erfindung wird im Folgenden unter Bezugnahme auf Ausführungsformen, auf die die Erfindung jedoch nicht beschränkt ist, näher beschrieben.

### Kurze Beschreibung der Zeichnungen

Figur 1 zeigt schematisch eine Architektur eines Deep Learning Algorithmus mit einem Convolutional Neural Network, gekoppelt mit einer Multi-Task Learning Implementierung, gemäß einem exemplarischen Ausführungsbeispiel der Erfindung.
Figur 2 zeigt schematisch eine Ausgabe des Deep Learning Algorithmus, gemäß einem exemplarischen Ausführungsbeispiel der Erfindung.
Figur 3 zeigt eine erste Auswertung eines Achszähler Datensatzes, gemäß einem exemplarischen Ausführungsbeispiel der Erfindung.
Figur 4 zeigt eine zweite Auswertung eines Achszähler Datensatzes, gemäß einem exemplarischen Ausführungsbeispiel der Erfindung.
Die Figuren 5 und 6 zeigen jeweils einen Datensatz eines Achszählers.
Die Figuren 7 bis 9 illustrieren eine konventionelle Schwellenwert-basierte Methode und deren Nachteile.
Figur 10 zeigt einen Achszähler gemäß einem exemplarischen Ausführungsbeispiel der Erfindung.

### Detaillierte Beschreibung der Zeichnungen

Die Darstellung in den Zeichnungen sind schematisch. Es wird darauf hingewiesen, dass in unterschiedlichen Abbildungen ähnliche oder identische Elemente oder Merkmale mit den gleichen Bezugszeichen oder mit Bezugszeichen versehen sind, die sich von den entsprechenden Bezugszeichen nur innerhalb der ersten Ziffer unterscheiden. Um unnötige Wiederholungen zu vermeiden, werden Elemente oder Merkmale, die bereits in Bezug auf eine zuvor beschriebene Ausführungsform erläutert wurden, an einer späteren Stelle der Beschreibung nicht noch einmal erläutert.

Darüber hinaus werden räumlich relative Begriffe wie "vorne" und "hinten", "oben" und "unten", "links" und "rechts" usw. verwendet, um die Beziehung eines Elements zu einem anderen Element zu beschreiben, wie in den Abbildungen dargestellt. So können die räumlich relativen Begriffe auf verwendete Orientierungen zutreffen, die von der in den Abbildungen dargestellten Orientierung abweichen. Offensichtlich beziehen sich diese räumlich relativen Begriffe lediglich auf eine Vereinfachung der Beschreibung und die in den Abbildungen gezeigte Orientierung und sind nicht notwendigerweise einschränkend, da eine Vorrichtung gemäß einer Ausführungsform der Erfindung andere Orientierungen als die in den Abbildungen dargestellten annehmen kann, insbesondere wenn sie verwendet wird.

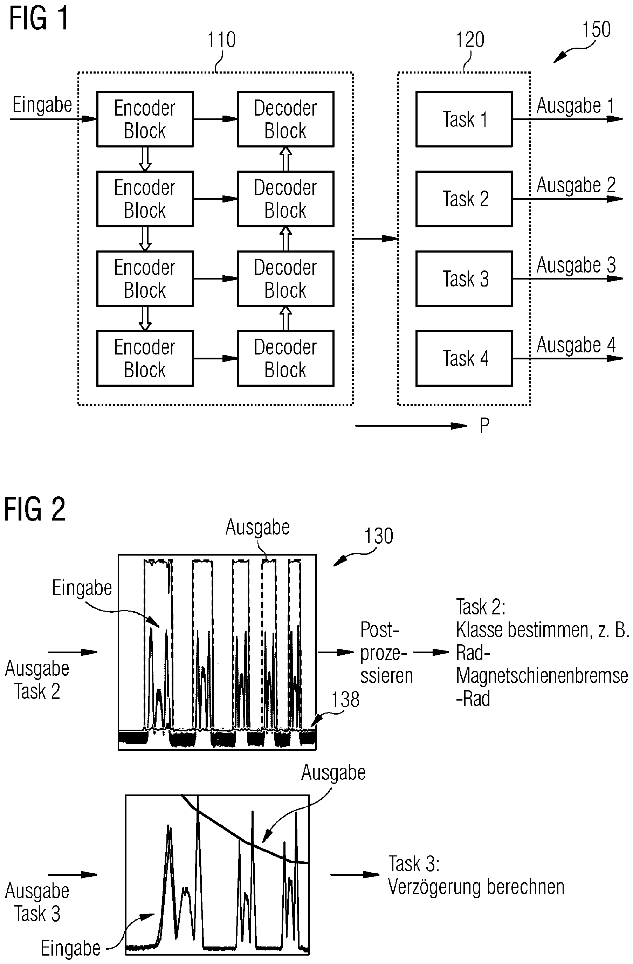

**Figur 1** zeigt schematisch die Architektur eines Deep Learning Algorithmus 150 mit einem Convolutional Neural Network 110 gekoppelt, mit einer Multi-Task Learning Implementierung 120, gemäß einem exemplarischen Ausführungsbeispiel der Erfindung.

Das Convolutional Neural Network 110 ist als U-Net realisiert, welches eine Mehrzahl von Encoder-Schichten (down-sampling) und eine Mehrzahl von Decoder-Schichten (up-sampling) aufweist. Diese klassischen Encoder- und Decoder-Sichten werden nun mit Schichten der Multi-Task Learning Implementierung 120 kombiniert. Dadurch können Schichten zur Erkennung unterschiedlicher Merkmale im Signal kombiniert werden. In Prozessrichtung P ist die Multi-Task Learning Implementierung 120 dem Convolutional Neural Network 110 nachgeschaltet. Gewöhnlich wird für jeden Encoder-Block das Signal um den Faktor zwei abgetastet und umgekehrt für den Decoder-Block.

Während genau ein Convolutional Neural Network 110 verwendet wird, ermöglicht die Multi-Task Learning Implementierung 120 dennoch eine Bearbeitung einer Vielzahl von Aufgaben (Tasks), insbesondere zeitgleich. Diese umfassen im vorliegenden Beispiel:
Aufgabe 1: Zeitpunkt Klasse Task, z.B. Rad,
   Magnetschienenbremse?
Aufgabe 2: Zeitbereich Klasse Task, z.B. Drehgestell, Waggon?
Aufgabe 3: Geschwindigkeit (Berechnungsaufgabe) Task, z.B. Verzögerung, Geschwindigkeit?

In einem exemplarischen Beispiel werden auf maschinellem Lernen (ML) basierende Mustererkennungsmethoden verwendet, um die von den Sensoren des Achszählers erfassten Daten zu verarbeiten. Zunächst werden Daten gesammelt und erfasst, so dass ein Erlernen von Unterscheidungsmerkmalen ermöglicht ist. Bei der Auswertung können dann folgende Schritte durchgeführt werden:
i) Erkennen (Bestimmen, Extrahieren): ob und wo im Signal ein Unterscheidungsmerkmal vorhanden ist (z.B. Drehgestell, Rad, Magnetschienenbremse, etc.).
ii) Klassifizieren (Signal Klassen): welche Art von Unterscheidungsmerkmal darstellt ist, z.B. Punkt (Rad, Magnetschienenbremse), Bereich (Drehgestell mit Magnetschienenbremse, Drehgestell ohne Magnetschienenbremse).
iii) Segmentieren: eine präzise Lokalisierung möglicher Mehrfachvorkommen eines Unterscheidungsmerkmals (z.B. mehrere Räder in einem Drehgestell). Erkennen und Segmentieren können hier ähnliche Aufgaben sein. In der Regel ist das Erkennen weniger präzise und erfolgt mit schnelleren Methoden (z.B. Signal Cluster erfassen), während das Segmentieren verfeinert ist und dazu verwendet werden kann, die Struktur des Objekts weiter in feinere Merkmalsebenen zu zerlegen (z.B. Signal Cluster in einzelne Signale, z.B. kann ein Drehgestell-Signal weiter in Magnetschienenbremse-Signal und Radsignale unterteilt werden).

Das Convolutional Neural Network 110 weist im gezeigten Beispiel eine Mehrzahl von Encodern auf, welche die erste Hälfte des Algorithmus darstellen. In der Regel handelt es sich um ein Klassifizierungsnetzwerk, in dem Convolutional Blocks gefolgt von einem down-sampling (z.B. Maxpool) anwendet werden, um das Eingangssignal in Merkmal-Darstellungen auf mehreren verschiedenen Ebenen zu kodieren.

Das Convolutional Neural Network 110 weist zudem eine Mehrzahl von Decodern auf, welche die zweite Hälfte des Algorithmus darstellen. Ziel ist es, die vom Encoder erlernten Unterscheidungsmerkmale (niedrigere Auflösung) semantisch auf den höher aufgelösten Probenraum zu projizieren, um eine dichte Klassifizierung zu erhalten. Der Decoder kann z.B. up-sampling und Concatenation Schritte aufweisen, gefolgt von regelmäßigen Convolutional Operations.

**Figur 2** zeigt schematisch eine Ausgabe des Deep Learning Algorithmus 150 von Figur 1, gemäß einem exemplarischen Ausführungsbeispiel der Erfindung. Es lässt sich erkennen, dass in dem ausgewerteten Datensatz 130 Signal Cluster bestimmt wurden (als Boxen eingezeichnet). Diese bestimmten Signale werden (mittels Postprozessieren weiter verfeinert, z.B. Koordination, Plausibilitätscheck) in Signal Klassen eingeordnet. Mit Bezugszeichen 138 ist die "ground truth" bezeichnet.

Im vorliegenden Fall sind alle Signal Cluster den Signal Klassen "zweiachsiges Drehgestell" und "zwei Räder mit Magnetschienenbremse dazwischen" zuzuordnen; siehe auch Aufgabe 2 oben.

Ferner kann (unten schematisch gezeigt) basierend auf der Auswertung 130 auch eine Verzögerung eines passierenden Schienenfahrzeugs bestimmt werden; siehe Aufgabe 3 (Geschwindigkeit Task) oben. So wird das Schienenfahrzeug nach dem ersten, langgezogenen, Signal Cluster wieder schneller (siehe zweites und drittes, kürzeres, Signal Cluster). Dieser Umstand ist ferner als abfallende Kurve eingezeichnet (Verzögerung überwunden).

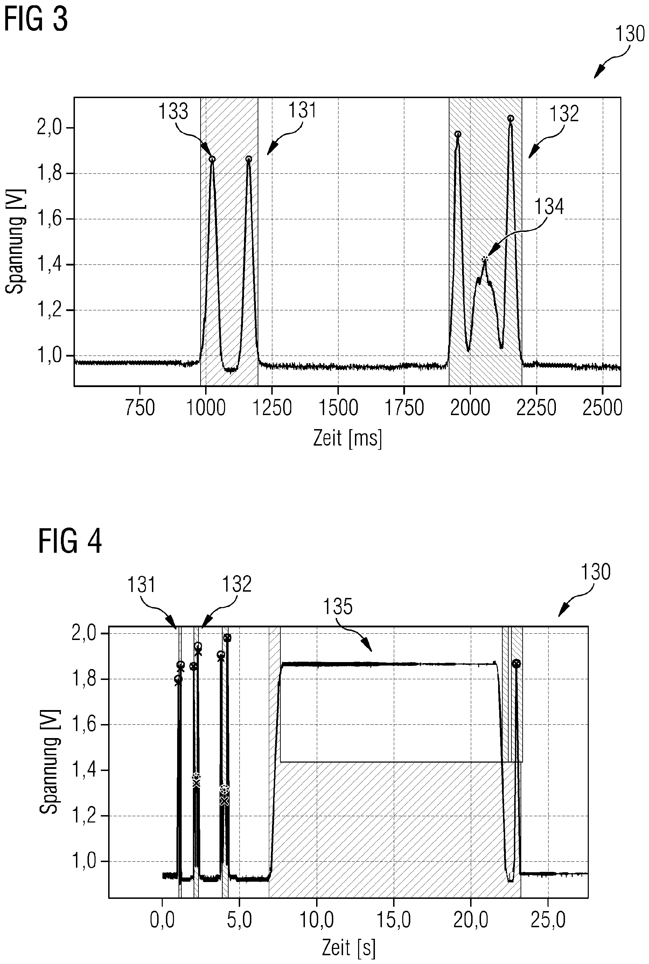

**Figur 3** zeigt eine erste Auswertung 130 eines Achszähler Datensatzes, gemäß einem exemplarischen Ausführungsbeispiel der Erfindung. Im gezeigten Beispiel wurden korrekt zwei unterschiedliche (Signal-) Formen (bzw. Signal Klassen) bestimmt:
i) zweiachsiges Drehgestell ohne Magnetschienenbremse 131 und
ii) zweiachsiges Drehgestell mit Magnetschienenbremse 132. Eine wichtige Beobachtung ist hierbei, dass bestimmte Signale in der Regel bestimmten Formen folgen und sich somit in Signal Klassen einordnen lassen. Die Signal Klasse "zwei Räder" 133 wird z.B. durch Formen von zwei hohen Signal Peaks dargestellt, während die Signal Klasse "zwei Räder mit einer Magnetschienenbremse 134 dazwischen" durch Formen von zwei hohen Signal-Peaks mit einem niedrigen Signal dazwischen dargestellt wird.

**Figur 4** zeigt eine zweite Auswertung 130 eines Achszähler Datensatzes, gemäß einem exemplarischen Ausführungsbeispiel der Erfindung. Zwischen den Radsignalen 131, 132 liegt ein besonders großer Abstand 135, den ein konventioneller Ansatz nicht erkennen kann. Mittels des beschriebenen Verfahrens kann aber festgestellt werden, dass hier ein Stopp des Zuges am Sensor vorliegt (mittels der Laufzeit-basierten Task).

**Figur 10** zeigt einen Achszähler 100 gemäß einem exemplarischen Ausführungsbeispiel der Erfindung. Dieser weist eine Sensorvorrichtung 101 (z.B. ein, zwei, oder mehr Sensoren, z.B. Doppelsensor-System) auf, die an einer Schiene 101 befestigt ist und die oben beschriebenen Datensätzen aufnehmen kann. Die Sensorvorrichtung 102 ist in diesem Beispiel über Kabel (alternativ kabellos) mit einer Auswertevorrichtung 103 verbunden. Diese Auswertevorrichtung 103 ist eingerichtet den gemessenen Datensatz zu erhalten und nach dem oben beschriebenen Verfahren auszuwerten bzw. zu validieren.

Es sei darauf hingewiesen, dass der Begriff "aufweisend" andere Elemente oder Schritte nicht ausschließt und die Verwendung des Artikels "ein" eine Vielzahl nicht ausschließt. Auch Elemente, die in Verbindung mit verschiedenen Ausführungsformen beschrieben werden, können kombiniert werden. Es ist auch darauf hinzuweisen, dass Bezugszeichen in den Ansprüchen nicht so ausgelegt werden sollten, dass sie den Umfang der Ansprüche einschränken.

Unabhängig vom grammatikalischen Geschlecht eines bestimmten Begriffes sind Personen mit männlicher, weiblicher oder anderer Geschlechtsidentität mit umfasst.

## Patentansprüche

1. Ein computer-implementiertes Verfahren zum Auswerten von einem Datensatz eines Achszählers (100), das Verfahren aufweisend:
Bestimmen einer Mehrzahl von Signalen aus dem Datensatz;
Klassifizieren der bestimmten Signale; und
Bereitstellen einer Auswertung des Datensatzes (130) basierend auf dem Bestimmen und dem Klassifizieren der Signale;
wobei das Bestimmen und das Klassifizieren der Signale mittels eines Deep Learning Algorithmus (150) durchgeführt wird, und
wobei der Deep Learning Algorithmus (150) ein Convolutional Neural Network (110) aufweist.

2. Das Verfahren gemäß Anspruch 1,
wobei das Klassifizieren ein Einordnen in eine Signal Klasse und/oder ein Bestimmen eines Parameters aufweist.

3. Das Verfahren gemäß Anspruch 2,
wobei die Signal Klassen zumindest eine der folgenden aufweisen:
eine Zeitpunkt Klasse, insbesondere zumindest eines von Rad und Magnetschienenbremse;
eine Zeitbereich Klasse, insbesondere zumindest eines von zwei-Räder (131), zwei-Räder-eine-Magnetschienenbremse (132), einachsiges Drehgestell, zweiachsiges Drehgestell.

4. Das Verfahren gemäß Anspruch 2 oder 3, wobei das Bestimmen des Parameters aufweist:
einen Laufzeitunterschied, insbesondere betreffend zumindest eines von Geschwindigkeit, Verzögerung, Beschleunigung.

5. Das Verfahren gemäß einem der vorhergehenden Ansprüche, wobei das Convolutional Neural Network (110) mit einer Multi-Task Learning Implementierung (120) gekoppelt ist, insbesondere wobei die Multi-Task Learning Implementierung (120) eingerichtet ist, zwei oder mehr Aufgaben zu bearbeiten, weiter insbesondere wobei jede Aufgabe mit zumindest einer Signal Klasse und/oder einem Bestimmen eines Parameters assoziiert ist.

6. Das Verfahren gemäß Anspruch 5,
wobei der Deep Learning Algorithmus (150) genau ein Convolutional Neural Network (110) aufweist, und
wobei mittels der Kopplung mit der Multi-Task Learning Implementierung (120) eine Mehrzahl von Aufgaben bearbeitbar sind.

7. Das Verfahren gemäß Anspruch 5 oder 6,
wobei die Multi-Task Learning Implementierung (120) dem Convolutional Neural Network (110) in Prozessrichtung (P) nachgeschaltet ist,
insbesondere wobei Encoder und Decoder Schichten des Convolutional Neural Network (110) mit Multi-Task Learning Schichten der Multi-Task Learning Implementierung (120) kombiniert sind.

8. Das Verfahren gemäß einem der vorhergehenden Ansprüche, wobei das Bestimmen der Mehrzahl von Signalen aufweist:
Segmentieren des Datensatzes zum Extrahieren der Mehrzahl von Signalen.

9. Das Verfahren gemäß einem der vorhergehenden Ansprüche, wobei das Convolutional Neural Network (110) ein U-Net aufweist.

10. Das Verfahren gemäß einem der vorhergehenden Ansprüche, ferner aufweisend:
Trainieren des Deep Learning Algorithmus (150) mit einer Mehrzahl von Achszähler Datensätzen,
insbesondere wobei das Trainieren ferner aufweist: Erlernen von Signalformen, welche für bestimmte Signal Klassen indikativ sind.

11. Das Verfahren gemäß einem der vorhergehenden Ansprüche, ferner aufweisend:
Bestimmen von zumindest einem der folgenden basierend auf der Auswertung (130): einer Geschwindigkeit, einer Länge, eines Fahrzeug-Typs, einer Anomalie, insbesondere einem Defekt, einer benötigten Wartung.

12. Das Verfahren gemäß einem der vorhergehenden Ansprüche, wobei das Verfahren im Zusammenhang mit Schienen-gebundenen Fahrzeugen und/oder Schieneninfrastruktur eingesetzt wird.

13. Eine Vorrichtung zur Datenverarbeitung (103), welche zumindest einen Prozessor aufweist, und welche eingerichtet ist das Verfahren gemäß einem beliebigen der Ansprüche 1 bis 12 auszuführen.

14. Einen Achszähler (100), welcher aufweist:
zumindest einen Sensor (102) zum Aufnehmen eines Datensatzes; und
eine Vorrichtung zur Datenverarbeitung (103) gemäß Anspruch 13, welche mit dem zumindest einen Sensor (102) gekoppelt ist.

15. Ein Computerprogrammprodukt, welches Befehle aufweist, die bei der Ausführung des Programms durch einen Computer diesen veranlassen, das Verfahren gemäß einem beliebigen der Ansprüche 1 bis 13 auszuführen.
